# EUROPÄISCHE PATENTSCHRIFT

(11) **EP 3 118 081 B1**
(45) Veröffentlichungstag und Bekanntmachung des Hinweises auf die Patenterteilung: **28.08.2019**
(21) Anmeldenummer: 15176772.0
(22) Anmeldetag: 15.07.2015
(51) Int. Cl.: B61D 17/22, B62D 47/02

(54) **FAHRZEUG, UMFASSEND MINDESTENS ZWEI GELENKIG MITEINANDER VERBUNDENE FAHRZEUGTEILE**
VEHICLE COMPRISING AT LEAST TWO VEHICLE PARTS WITH A JOINTED CONNECTION
VEHICULE, COMPRENANT AU MOINS DEUX PARTIES DE VEHICULE RELIEES DE MANIERE ARTICULEE

(43) Veröffentlichungstag der Anmeldung: 18.01.2017
(73) Patentinhaber: Hübner GmbH & Co. KG, 34123 Kassel (DE)
(72) Erfinder: Jünke, Volker, 34123 Kassel (DE)
(74) Vertreter: Patentanwälte Walther Hinz Bayer PartGmbB

(56) Entgegenhaltungen:
- EP-A1- 0 293 051
- EP-A1- 0 499 773
- EP-A1- 2 082 942
- EP-A1- 2 740 618
- EP-A2- 2 236 323
- KR-A- 20140 132 933
- US-A- 843 233
- US-A- 3 410 226

## Beschreibung

Die Erfindung betrifft ein Fahrzeug, umfassend mindestens zwei gelenkig miteinander verbundene Fahrzeugteile, z. B. eine Straßenbahn oder einen Gelenkbus, gemäß dem Oberbegriff des Anspruches 1.

Gelenkig miteinander verbundene Fahrzeuge oder Fahrzeugteile, z. B. Straßenbahnen oder auch Gelenkbusse zeichnen sich üblicherweise durch einen Übergang zwischen den beiden Fahrzeugteilen aus. Der Übergang umfasst im Einzelnen eine Übergangsplattform oder auch eine Übergangsbrücke, die von einem Falten- oder Wellenbalg zumindest U-förmig häufig allerdings auch tunnelförmig umgeben wird. Hierdurch wird gewährleistet, dass Personen zwischen den einzelnen Fahrzeugteilen wechseln können, ohne Witterungseinflüssen ausgesetzt zu sein. Der Balg des Übergangs ist hierbei in der Lage, sämtlichen Fahrbewegungen zwischen den beiden Fahrzeugteilen nachzugeben, als da sind insbesondere Knick-, Nick- und Wankbewegungen, bei Schienenfahrzeugen gegebenenfalls auch Versatzbewegungen. Hieraus folgt, dass der Balg als Teil des Übergangs hoch verformbar ist.

Insbesondere bei schnell fahrenden Schienenfahrzeugen, wie z. B. dem ICE oder dem TGW ist darüber hinaus bekannt, zwei ineinander gelagerte Bälge vorzusehen, um eine erhöhte Geräuschdämmung gewährleisten zu können, bzw. auch um eine verbesserte thermische Isolierung zu ermöglichen. Darüber hinaus sorgen derartige Doppelwellenbälge dafür, dass Druckstöße, wie sie entstehen, wenn ein solches Fahrzeug beispielsweise mit hoher Geschwindigkeit in einen Tunnel einfährt, lediglich in abgeschwächter Form in das Innere des Übergangs gelangen. Derartige Doppelwellenbälge sind häufig sehr dick, sodass die lichte Durchgangsweite zwischen den Fahrzeugen im Bereich des Übergangs verhältnismäßig gering ist, sodass es zum Teil für Rollstuhlfahrer unmöglich ist, zwischen den Fahrzeugteilen hin und her zu wechseln. Insofern ist man auch bestrebt, die lichte Durchgangsweite zwischen zwei Fahrzeugen im Bereich des Übergangs möglichst großzügig zu gestalten.

Aus der EP 2 546 119 A2 ist ein flächenförmiges oder im Querschnitt kästen- oder U-förmig umlaufendes Verbindungselement zwischen zwei gelenkig miteinander verbundenen Fahrzeugen bekannt, wobei das Verbindungselement einen flächenförmigen mit einem Elastomer beschichteten Festigkeitsträger aufweist. Der Festigkeitsträger selbst zeigt eine Vielzahl von Fäden oder Garnen, wobei die Fäden oder Garne aus einem elastischen Material hergestellt sind, insbesondere einem vernetzten Silikonkautschuk. Die Anordnung der Fäden oder Garne bei einem Gewebe kann hierbei derart sein, dass dieses zumindest in einer, vorzugsweise allerdings in zwei Raumrichtungen elastisch nachgiebig ausgebildet ist, was bedeutet, dass sowohl die Kettfäden als auch die Schussfäden aus einem solchen elastischen Material, insbesondere einem vernetzten Silikonkautschuk hergestellt sind.

Aus der EP 2 740 618 A1 ist in diesem Zusammenhang bekannt, eine in sich elastische Abdeckung zwischen zwei Fahrzeugteilen als Teil eines Übergangs vorzusehen, wobei die Abdeckung außenhautbündig an den Stirnseiten der beiden benachbarten Fahrzeugteile angeordnet ist, um eine Wirbelbildung zwischen den beiden Fahrzeugteilen und damit Strömungsverluste zu vermeiden. Zur Stabilisierung der Abdeckung ist vorgesehen, die Abdeckung mit umlaufenden Rahmen zu versehen, wobei die Abdeckung durch Keder in den Rahmen fixierbar ist.

Aus der KR 2014 0132933 A ist bekannt, einen doppelwandigen Balg als Verbindungselement zwischen den Fahrzeugteilen eines Gelenkfahrzeugs einzubauen.

Die EP 0 293 051 A1 beschreibt ein Fahrzeug gemäß dem Oberbegriff des Anspruches 1. Die hier als doppelwandiger Balg ausgebildete Abdeckung ist aus einem vulkanisiertem Gummiwerkstoff hergestellt. In den Raum zwischen den beiden Balgwänden kann Druckluft eingeführt werden, wobei hierdurch eine dichte Verbindung der balgartigen Abdeckung zu den Fahrzeugteilen bewirkt wird.

Die der Erfindung zugrunde liegende Aufgabe besteht ausgehend von dem Stand der Technik darin, eine Abdeckung zwischen zwei gelenkig miteinander verbundenen Fahrzeugteilen bei einem Fahrzeug der eingangs genannten Art bereitzustellen, dass eine erhöhte Schalldämmung bereitstellt und darüber hinaus thermisch isolierend ist, wobei des Weiteren die Abdeckung zwischen den Stirnseiten der beiden benachbarten Fahrzeugteile nur eine geringe Stärke aufweist. Darüber hinaus soll die Abdeckung erhöhten Anforderungen hinsichtlich Dichtigkeit, insbesondere gegen eindringendes Wasser genügen.

Zur Lösung der Aufgabe wird erfindungsgemäß vorgeschlagen, die Abdeckung aus einem mit einem Elastomer beschichteten Festigkeitsträger auszubilden, der elastische Fäden oder Garne aufweist, wobei zwischen der äußeren und der inneren Wandung der Abdeckung mindestens ein Abstandshalter über die Länge der Abdeckung angeordnet ist. Eine solche Abdeckung mit einer äußeren und einer inneren Wandung, aus elastisch nachgiebigem Material, also beispielsweise aus einem mit einem Elastomer beschichteten Festigkeitsträger, dessen Fäden oder Garne in sich elastisch nachgiebig sind, wie z. B. Fäden oder Garne aus vernetztem Silikonkautschuk, genügt insbesondere erhöhten Anforderungen an die Dichtigkeit insofern, als diese lediglich aus einem einzelnen Teil bestehen, bzw. einteilig hergestellt sind, und insofern keinen doppelten Anschluss zum Inneren des Übergangs zu aufweisen, wie dies beispielsweise bei einem Doppelwellenbalg der Fall ist, wobei die beiden Bälge eines solchen Doppelwellenbalges bekanntermaßen jeder für sich an der Stirnwand des Fahrzeugteiles befestigt wird. Dadurch nun, dass die Abdeckung einteilig ausgebildet ist, ist hierdurch eine erhöhte Sicherheit gegen eindringendes Wasser gegeben. Darüber hinaus baut eine solche Abdeckung äußerst schmal, wobei die Abdeckung insgesamt nur eine Stärke von 40 bis 50 mm aufweist.

Durch die Anordnung mindestens eines Abstandshalters zwischen der äußeren und der inneren Wandung über die Länge der Abdeckung, wird eine Stabilisierung der Abdeckung erreicht. In diesem Zusammenhang ist des Weiteren vorgesehen, dass die Fixierung der Abdeckung auf dem Abstandshalter durch eine Kederverbindung erfolgt; das heißt, der Abstandshalter weist eine Nut auf, wobei in die Nut, unter Erfassung der Außen- oder Innenwandung der Abdeckung, ein Keder eingedrückt wird. Der Abstandshalter kann ebenso wie das Umlenkprofil aus einem Elastomer hergestellt sein. Darüber hinaus kann der Abstandshalter, insbesondere, wenn dieser auch aus einem Elastomer hergestellt ist, eine Versteifungseinlage, beispielsweise in Form eines Aluminiumprofils aufweisen. In diesem Zusammenhang ist insbesondere vorgesehen, dass die Abdeckung im Bodenbereich in Längsrichtung der Abdeckung geöffnet ist, um die Abstandshalter einschieben zu können.

Es wurde bereits darauf hingewiesen, dass die Abdeckung in ein oder zwei Raumrichtungen elastisch nachgiebig ist. Die Abdeckung kann hierbei einen Festigkeitsträger aufweisen, und zwar in Form eines Vlieses, Gewebes oder Gewirkes. Der Festigkeitsträger besitzt für die elastisch nachgiebige Ausbildung in einer bzw. zwei Raumrichtungen elastische Fäden oder Garne, z. B. aus vernetztem Silikonkautschuk mit Modulwerten von 20 bis 100 cN/800%, insbesondere von 20 bis 80 cN/800% Dehnung.

Vorteilhafte Merkmale und Ausgestaltungen der Erfindung ergeben sich aus den Unteransprüchen.

So ist insbesondere vorgesehen, dass die äußere und die innere Wandung einteilig nach Art einer Schlaufe zwischen den Fahrzeugteilen geführt sind. Das heißt, die Enden der Schlaufe sind mit der jeweiligen stirnseitigen Wandung der beiden Fahrzeugteile verbunden. Hierzu ist nach einem besonderen Merkmal der Erfindung vorgesehen, dass die Abdeckung durch jeweils eine Klemmeinrichtung an den Stirnwänden der beiden Fahrzeugteile befestigt ist. Durch eine solche Klemmeinrichtung wird bewirkt, dass das Material der Abdeckung selbst für die Befestigung an der Stirnseite des jeweiligen Fahrzeuges nicht beschädigt werden muss. Hieraus wird folgendes deutlich: Die Abdeckung wird an zumindest der Stirnseite des ersten Fahrzeugteils um 180° umgelenkt. An der Stirnseite des anderen gegenüberliegenden zweiten Fahrzeugteils kann die Abdeckung ebenfalls geschlossen sein, also um 180° umgelenkt sein.

Die Enden der Abdeckung können hierbei z. B. miteinander vernäht oder verklebt sein. Denkbar ist allerdings auch die Herstellung eines quasi doppelwandigen Schlauches, der bereits bei der Herstellung an den stirnseitigen Enden der Fahrzeugteile geschlossen ist.

Die Abdeckung ist zumindest U-förmig tangential umlaufend ausgebildet. Das heißt, dass die Abdeckung auch im Bereich des Fahrzeugbodens, also im Bereich der gelenkigen Verbindung der beiden Fahrzeugteile, geschlossen ausgebildet ist, also kästen- oder tunnelförmig umlaufend gestaltet sein kann.

Um die Abdeckung leichter montieren zu können, können die Enden in Längsrichtung der Abdeckung, also parallel zur Längsachse der Fahrzeugteile, nach der Montage der Abdeckung miteinander verbunden werden, z. B. durch unmittelbares Vernähen oder Verkleben oder durch ein Bodentuch. Das heißt, vor der Montage ist die Abdeckung in Längsrichtung geöffnet.

Im Einzelnen ist in Bezug auf die Klemmeinrichtung ein an der Stirnwand des jeweiligen Fahrzeugteils angeordnetes, im Wesentlichen U-förmig umlaufendes Aufnahmeprofil vorgesehen, das der Aufnahme eines Umlenkprofiles für die Abdeckung dient. Das Aufnahmeprofil kann hierbei aus einem Metall hergestellt sein, und ist vorzugsweise im Querschnitt C-förmig ausgebildet. Um das Umlenkprofil herum ist die Abdeckung geführt, wobei schlussendlich das Umlenkprofil mit der darauf gelagerten Abdeckung in der C-förmigen Aussparung des insbesondere aus Metall hergestellten Aufnahmeprofils gelagert. Um nun zu verhindern, dass durch das Aufnahmeprofil die Abdeckung beschädigt wird, ist zwischen Aufnahmeprofil und Umlenkprofil ein sogenanntes Schutzprofil vorgesehen. Sowohl das Umlenkprofil als auch vorzugsweise das Schutzprofil sind aus einem Elastomer hergestellt. Um den sicheren Schutz des Umlenkprofils bzw. der darauf gelagerten Abdeckung zu erzielen, ist vorgesehen, dass das Schutzprofil das Umlenkprofil im Bereich des Aufnahmeprofils erfasst.

Um des Weiteren ein Verrutschen der Abdeckung auf dem Umlenkprofil zu verhindern, sind die beiden Wandungen der Abdeckung auf dem Umlenkprofil durch eine Kedereinrichtung gesichert. Die Kedereinrichtung selbst umfasst ein Kederprofil, das in eine entsprechende Nut und in dem Umlenkprofil unter Erfassung der jeweiligen Wandung der Abdeckung eindrückbar ist.

Anhand der Zeichnungen wird die Erfindung nachstehend beispielhaft näher erläutert.
- Fig. 1: zeigt schematisch ein Fahrzeug mit zwei Fahrzeugteilen, die durch eine gelenkige Verbindung miteinander verbunden sind;
- Fig. 2: zeigt einen Schnitt gemäß der Linie II-II gemäß Fig. 1;
- Fig. 3: zeigt einen Schnitt gemäß der Linie III-III aus Fig. 2.

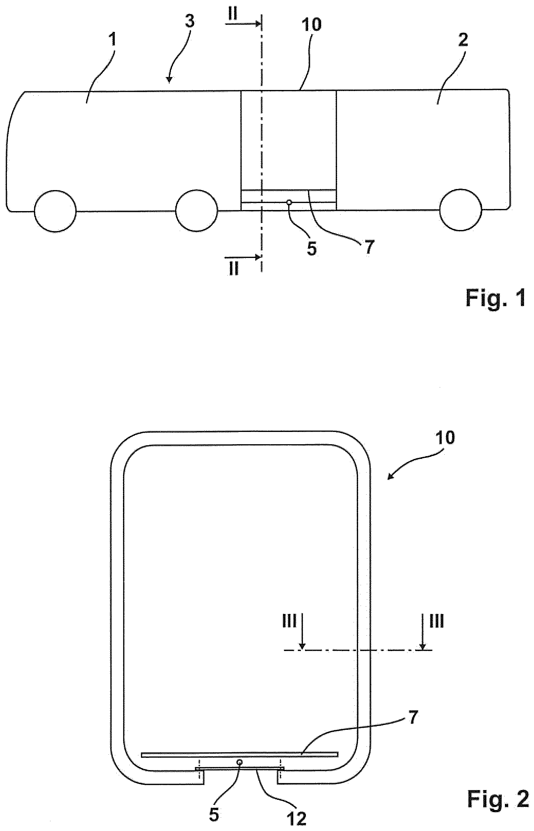

Die beiden Fahrzeugteile 1 und 2 sind zur Bildung eines Gelenkfahrzeuges 3 durch eine schematisch dargestellte gelenkige Verbindung 5 miteinander verbunden. Oberhalb der gelenkigen Verbindung verläuft die Plattform 7. Sowohl die Plattform 7 als auch die gelenkige Verbindung 5 sind durch die mit 10 bezeichnete Abdeckung U-förmig oder auch tunnelartig umgeben (Fig. 2), wobei im Bodenbereich ein Bodentuch 12 zur Verbindung der beiden Enden der Abdeckung 10 vorgesehen ist.

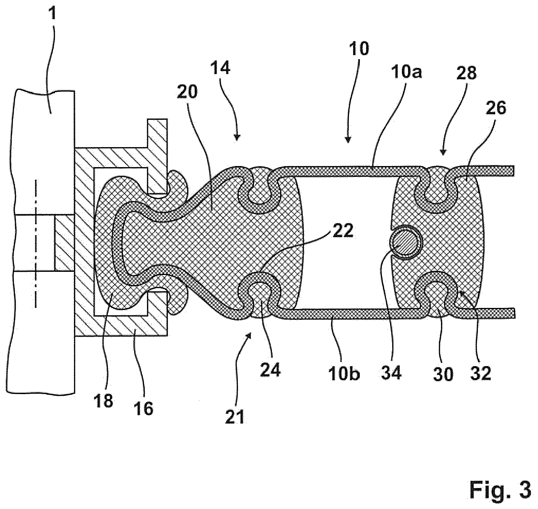

Gegenstand der Erfindung ist nunmehr die Ausbildung der Abdeckung 10. Die Abdeckung 10 ist als Schlaufe ausgebildet, und verbindet die beiden Stirnseiten der einander benachbarten und einander zugerichteten Fahrzeugteile 1 und 2. Gehalten wird die Abdeckung 10 an den beiden Stirnseiten der Fahrzeugteile 1 und 2 durch jeweils eine zumindest U-förmig umlaufende Klemmeinrichtung 14. Die Klemmeinrichtung 14 umfasst ein im Querschnitt C-förmiges an der Stirnseite des Wagenkastens angeordnetes Aufnahmeprofil 16 aus Metall, wobei in dem C-förmigen Aufnahmeprofil ein aus einem Elastomer hergestelltes Schutzprofil 18 das Umlenkprofil 20 aufnimmt. Sowohl das Schutzprofil 18 als auch das Umlenkprofil 20 sind aus einem Elastomer hergestellt, wobei um die beiden an den Stirnseiten der Fahrzeugteile 1, 2 angeordneten Umlenkprofile 20 herum die nach Art einer Schlaufe ausgebildete Abdeckung mit der äußeren Wandung 10a und der inneren Wandung 10b geführt ist, wie sich dies unmittelbar in Anschauung von Fig. 3 ergibt. Das Schutzprofil 18 ist hierbei derart getroffen, dass es im Bereich des C-förmigen Aufnahmeprofils 16 das Umlenkprofil gegenüber dem C-förmigen Aufnahmeprofil 16 abschirmt. Um nun zu verhindern, dass auf dem Umlenkprofil 20 die Abdeckung 10 verrutscht, weist das Umlenkprofil 20 eine Kederverbindung 21 mit einer Nut 22 auf, wobei in der Nut die Abdeckung 10 geführt wird, und dort in der Nut durch ein Kederprofil 24 die Abdeckung fixiert wird.

Zur Stabilisierung der Abdeckung 10 sind zwischen den beiden Umlenkprofilen die Außenwandung 10a und die Innenwandung 10b verbindende Abstandshalter 26 vorgesehen, die ebenfalls aus einem Elastomerprofil bestehen können. Zur Verbindung der Außenwandung 10a und auch der Innenwandung 10b mit dem jeweiligen Abstandshalter 26 ist ebenfalls eine Kederverbindung 28 vorgesehen, wobei das Kederprofil 30 der Kederverbindung 28 in eine entsprechende Nut 32 des Abstandshalters 26 zur Erfassung der Abdeckung 10 eindrückbar ist. Darüber hinaus kann vorgesehen sein, den Abstandshalter 26 durch ein Versteifungsprofil 34, z. B. ein Aluminiumprofil zu stabilisieren.

Das Kederprofil 24, 30 kann hierbei ebenso U-förmig oder tunnelförmig umlaufend ausgebildet sein, wie das Umlenkprofil 20, der Abstandshalter 26 oder das Aufnahmeprofil 16.

Es wurde bereits darauf hingewiesen, dass die Abdeckung 10 in ihrer Ausprägung als Schlaufe zwischen den Stirnseiten der beiden Fahrzeugteile 1, 2 die Plattform 7 U-förmig bzw. tunnelförmig umspannt, wie sich dies in Anschauung von Fig. 2 ergibt. Da die Abdeckung zumindest in einer vorzugsweise allerdings in zwei Raumrichtungen elastisch nachgiebig ist, was insbesondere durch den Einsatz eines Gewebes aus elastischen Fäden und hier insbesondere aus vernetzten Silikonkautschukfäden sowohl in Schuss- als auch in Kettrichtung ermöglicht wird, kann eine solche U-förmige Abdeckung sämtlichen auftretenden Fahrbewegungen zwischen den beiden Fahrzeugteilen nachgeben.

### Bezugszeichenliste:

- 1: Fahrzeugteil
- 2: Fahrzeugteil
- 3: Gelenkfahrzeug
- 5: gelenkige Verbindung
- 7: Plattform
- 10: Abdeckung
- 10a: Außenwandung
- 10b: Innenwandung
- 12: Bodentuch
- 14: Klemmeinrichtung
- 16: Aufnahmeprofil
- 18: Schutzprofil
- 20: Umlenkprofil
- 21: Kederverbindung
- 22: Nut
- 24: Kederprofil
- 26: Abstandshalter
- 28: Kederverbindung
- 30: Kederprofil
- 32: Nut
- 34: Versteifungsprofil

## Patentansprüche

1. Fahrzeug (3), umfassend mindestens zwei gelenkig miteinander verbundene Fahrzeugteile (1, 2), z. B. eine Straßenbahn oder ein Gelenkbus, wobei zur Überbrückung des Abstandes zwischen den beiden Fahrzeugteilen (1, 2) eine zumindest U-förmige Abdeckung (10) vorgesehen ist, die in sich elastisch nachgiebig ausgebildet ist, wobei die Abdeckung (10) doppelwandig ausgebildet ist, wobei die äußere Wandung (10a) und die innere Wandung (10b) einteilig ausgebildet sind,
**dadurch gekennzeichnet,**
**dass** die in sich elastische Abdeckung (10) einen mit einem Elastomer beschichteten Festigkeitsträger aufweist, der elastische Fäden oder Garne aufweist,
wobei zwischen der äußeren und inneren Wandung der Abdeckung (10) mindestens ein Abstandshalter (26) über die Länge der Abdeckung (10) angeordnet ist.

2. Fahrzeug (3) nach Anspruch 1,
**dadurch gekennzeichnet,**
**dass** die äußere und die innere Wandung (10a, 10b) einteilig hergestellt sind.

3. Fahrzeug (3) nach einem der voranstehenden Ansprüche,
**dadurch gekennzeichnet,**
**dass** die äußere und die innere Wandung (10a, 10b) einteilig, nach Art einer Schlaufe, zwischen den Fahrzeugteilen (1, 2) geführt sind.

4. Fahrzeug (3) nach einem der voranstehenden Ansprüche,
**dadurch gekennzeichnet,**
**dass** die Abdeckung (10) durch eine Klemmeinrichtung (14) an den Stirnwänden der beiden Fahrzeugteile (1, 2) befestigt ist.

5. Fahrzeug (3) nach Anspruch 4,
**dadurch gekennzeichnet,**
**dass** die Klemmeinrichtung (14) ein an der Stirnwand des jeweiligen Fahrzeugteils (1, 2) angeordnetes im Wesentlichen U-förmig umlaufendes Aufnahmeprofil (16) umfasst, dass der Aufnahme eines Umlenkprofiles (20) für die Abdeckung (10) dient.

6. Fahrzeug (3) nach Anspruch 5,
**dadurch gekennzeichnet,**
**dass** zwischen Umlenkprofil (20) und Aufnahmeprofil (16) ein Schutzprofil (18) vorgesehen ist.

7. Fahrzeug (3) nach Anspruch 6,
**dadurch gekennzeichnet,**
**dass** das Schutzprofil (18) das Umlenkprofil (20) im Bereich des Aufnahmeprofils (16) erfasst.

8. Fahrzeug (3) nach einem der Ansprüche 5 bis 7,
**dadurch gekennzeichnet,**
**dass** das Umlenkprofil (20) und/oder das Schutzprofil (18) aus einem Elastomer hergestellt ist.

9. Fahrzeug (3) nach einem der Ansprüche 5 bis 8,
**dadurch gekennzeichnet,**
**dass** die Abdeckung (10) auf dem Umlenkprofil (20) gegen Verrutschen gesichert ist.

10. Fahrzeug (3) nach einem der voranstehenden Ansprüche,
**dadurch gekennzeichnet,**
**dass** die Fixierung der Abdeckung (10) auf dem Umlenkprofil (20) oder auf dem Abstandshalter (26) durch mindestens eine Kederverbindung (21, 28) erfolgt.

11. Fahrzeug (3) nach einem der voranstehenden Ansprüche,
**dadurch gekennzeichnet,**
**dass** die Abdeckung (10) in einer vorzugsweise zwei Raumrichtungen elastisch nachgiebig ausgebildet ist.

12. Fahrzeug (3) nach einem der voranstehenden Ansprüche,
**dadurch gekennzeichnet,**
**dass** die Abdeckung (10) eine zwischen den beiden Fahrzeugteilen (1, 2) angeordnete Plattform (7) oder Brücke tunnelartig umgibt.

13. Fahrzeug (3) nach einem der voranstehenden Ansprüche,
**dadurch gekennzeichnet,**
**dass** der Festigkeitsträger als Gewebe, Gewirk oder Vlies ausgebildet ist.

14. Fahrzeug (3) nach einem der voranstehenden Ansprüche,
**dadurch gekennzeichnet,**
**dass** der Abstandshalter (26) ein Versteifungsprofil (34) aufweist.

## Claims

1. A vehicle (3) comprising at least two articulately connected vehicle parts (1, 2), for example, a tramway or an articulated bus, wherein for bridging the distance between the two vehicle parts (1, 2) an at least U-shaped cover (10) is provided, which is formed elastically flexible in itself, wherein the cover (10) is double-walled, wherein the outer wall (10a) and the inner wall (10b) are formed in one piece,
**characterized in**
**that** the cover (10) elastic in itself comprises a reinforcing support coated with an elastomer, which reinforcing support comprises elastic threads or yarns,
wherein between the outer and inner wall of the cover (10) at least a spacer (26) is located across the length of the cover (10).

2. The vehicle (3) according to claim 1,
**characterized in**
**that** the outer and the inner wall (10a, 10b) are made in one piece.

3. The vehicle (3) according to any one of the preceding claims,
**characterized in**
**that** the outer and the inner wall (10a, 10b) are led integrally between the vehicle parts (1, 2) in the manner of a loop.

4. The vehicle (3) according to any one of the preceding claims,
**characterized in**
**that** the cover (10) is fastened on the front walls of the two vehicle parts (1, 2) by a clamping device (14).

5. The vehicle (3) according to claim 4,
**characterized in**
**that** the clamping device (14) comprises a substantially U-shaped, circumferential mounting profile (16) located on the front wall of the respective vehicle part (1, 2) which mounting profile serves for receiving a deflector profile (20) for the cover (10).

6. The vehicle (3) according to claim 5,
**characterized in**
**that** a protective profile (18) is provided between the deflector profile (20) and the mounting profile (16).

7. The vehicle (3) according to claim 6,
**characterized in**
the protective profile (18) takes hold of the deflector profile (20) in the area of the mounting profile (16).

8. The vehicle (3) according to any one of claims 5 to 7,
**characterized in**
**that** the deflector profile (20) and/or the protective profile (18) are made of an elastomer.

9. The vehicle (3) according to any one of claims 5 to 8,
**characterized in**
**that** the cover (10) is secured against slipping on the deflector profile (20).

10. The vehicle (3) according to any one of the preceding claims,
**characterized in**
**that** the fastening of the cover (10) on the deflector profile (20) or on the spacer (26) is made by at least one piping connection (21, 28).

11. The vehicle (3) according to any one of the preceding claims,
characterized i n
that the cover (10) is formed elastically flexible in one, preferably in two directions in space.

12. The vehicle (3) according to any one of the preceding claims,
**characterized in**
**that** the cover (10) surrounds in a tunnel-like manner a platform (7) or bridge located between the two vehicle parts (1, 2).

13. The vehicle (3) according to any one of the preceding claims,
**characterized in**
**that** the reinforcing support is formed as a fabric, knitted fabric or non-woven material.

14. The vehicle (3) according to any one of the preceding claims,
**characterized in**
**that** the spacer (26) comprises a reinforcement profile (34).

## Revendications

1. Véhicule (3) comportant au moins deux parties de véhicule reliées de manière articulée (1, 2), par exemple, un tramway ou un bus articulé, une couverture (10) au moins en forme de U étant prévue pour couvrir la distance entre les deux parties de véhicule (1, 2) qui est formée élastiquement flexible en soi, la couverture (10) étant à double paroi, la paroi extérieure (10a) et la paroi intérieure (10b) étant formée d'une seule pièce,
**caractérisé en ce**
**que** la couverture (10) élastique en soi comporte un support de renforcement revêtu d'un élastomère qui comprend des filaments élastiques ou des fils,
au moins un espaceur (26) étant agencé entre la paroi extérieure et la paroi intérieure de la couverture (10) sur toute la longueur de la couverture (10).

2. Véhicule (3) selon la revendication 1,
**caractérisé en ce**
**que** la paroi extérieure et la paroi intérieure (10a, 10b) sont fabriquées d'une seule pièce.

3. Véhicule (3) selon l'une quelconque des revendications précédentes,
**caractérisé en ce**
**que** la paroi extérieure et la paroi intérieure (10a, 10b) sont guidées d'une seule pièce entre les parties de véhicule (1, 2) à la manière d'une boucle.

4. Véhicule (3) selon l'une quelconque des revendications précédentes,
**caractérisé en ce**
**que** la couverture (10) est fixée aux parois frontales des deux parties de véhicule (1, 2) par un dispositif de serrage (14).

5. Véhicule (3) selon la revendication 4,
**caractérisé en ce**
**que** le dispositif de serrage (14) comporte un profil récepteur (16) circonférentiel sensiblement en forme de U et agencé à la paroi frontale de la partie de véhicule (1, 2) respective qui sert pour recevoir un profil déflecteur (20) pour la couverture (10).

6. Véhicule (3) selon la revendication 5,
**caractérisé en ce**
**qu'**un profil de protection (18) est prévu entre le profil déflecteur (20) et le profil récepteur (16).

7. Véhicule (3) selon la revendication 6,
**caractérisé en ce**
**que** le profil de protection (18) saisit le profil déflecteur (20) dans la région du profil récepteur (16).

8. Véhicule (3) selon l'une quelconque des revendications 5 à 7,
**caractérisé en ce**
**que** le profil déflecteur (20) et/ou le profil de protection (18) sont fabriqués à partir d'un élastomère.

9. Véhicule (3) selon l'une quelconque des revendications 5 à 8,
**caractérisé en ce**
**que** la couverture (10) est assurée contre tout glissement sur le profil déflecteur (20).

10. Véhicule (3) selon l'une quelconque des revendications précédentes,
**caractérisé en ce**
**que** la fixation de la couverture (10) sur le profil déflecteur (20) ou sur l'espaceur (26) est effectuée par au moins un raccord de bourrelet (21, 28).

11. Véhicule (3) selon l'une quelconque des revendications précédentes,
**caractérisé en ce**
**que** la couverture (10) est formée élastiquement flexible dans une direction dans l'espace, de préférence dans deux directions de l'espace.

12. Véhicule (3) selon l'une quelconque des revendications précédentes,
**caractérisé en ce**
**que** la couverture (10) entoure en forme de tunnel une plateforme (7) ou un pont agencé entre les deux parties de véhicule (1, 2).

13. Véhicule (3) selon l'une quelconque des revendications précédentes,
**caractérisé en ce**
**que** le support de renforcement est formé comme tissu, tissu à mailles ou non-tissé.

14. Véhicule (3) selon l'une quelconque des revendications précédentes,
**caractérisé en ce**
**que** l'espaceur (26) comporte un profil de renforcement (34).
